# EUROPEAN PATENT APPLICATION

(11) **EP 4 125 146 A2**
(43) Date of publication of application: **01.02.2023**
(21) Application number: 22165232.4
(22) Date of filing: 29.03.2022
(51) Int. Cl.: H01M 10/613, H01M 10/625, H01M 10/6551, H01M 10/6554, H01M 10/6563, H01M 10/6567

(54) **BATTERY PACK AND METHOD FOR THERMAL MANAGEMENT OF BATTERY PACK**

(30) Priority: 30.07.2021 CN 202110871947
(71) Applicant: Nio Technology (Anhui) Co., Ltd, Hefei City, Anhui 230601 (CN)
(72) Inventor: WANG, Xianpeng, Hefei City, Anhui, 230601 (CN); JIANG, Yaping, Hefei City, Anhui, 230601 (CN); FANG, Jie, Hefei City, Anhui, 230601 (CN); TZENG, Shizhe, Hefei City, Anhui, 230601 (CN)
(74) Representative: Vossius & Partner Patentanwälte Rechtsanwälte mbB

(57) **Abstract**

The disclosure discloses a battery pack and a method for thermal management of a battery pack. The battery pack includes a battery cell and a housing, wherein the battery cell is accommodated in the housing, a cooling plate is arranged under the housing, the cooling plate can transfer heat of the battery cell to the outside of a vehicle, the housing is filled with an immersion liquid, and the battery cell is at least partially immersed in the immersion liquid. According to the disclosure, the temperature of the battery pack can be regulated in a simple manner.

## Description

### Technical Field

The disclosure relates to the field of vehicles, and in particular to a battery pack and a method for thermal management of such a battery pack.

### Background Art

The market share of new energy vehicles especially battery electric vehicles is increasing. A traction battery is one of core components of an electric vehicle, and its performances are directly related to the working states of the vehicle. The battery temperature will directly affect the safety, charge and discharge capacity and efficiency, cycle life and other performance of the battery, and then affect working performance of the vehicle. In addition, the temperature consistency of a battery pack is also an important guarantee for normal performances of the battery.

There exists an air-cooling structure for cooling the battery pack, which has a specially designed mechanism such as a fan and an air passage. The structure is complicated and the heat exchange efficiency is low. Conventional ternary/iron-lithium batteries cannot meet cooling requirements of high-power charge and discharge working conditions.

There is a method for cooling the battery pack by arranging a cooling plate at the bottom or around the battery. This structure is relatively complicated, with more internal structural components, and a temperature difference between individual battery cells is large.

Therefore, it is quite necessary to carry out adequate studies on the existing problems or defects including those mentioned above, so as to make improvements.

### Summary of the Disclosure

The disclosure provides a battery pack. The temperature of the battery pack can be regulated in a simple manner.

According to one aspect of the disclosure, a battery pack is provided, including a battery cell and a housing, wherein the battery cell is accommodated in the housing, a cooling plate is arranged under the housing, the cooling plate can transfer heat of the battery cell to the outside of a vehicle, the housing is filled with an immersion liquid, and the battery cell is at least partially immersed in the immersion liquid.

In the battery pack according to one aspect of the disclosure, the cooling plate is arranged at the bottom of the housing, and the cooling plate is in contact with the battery cell and/or the immersion liquid.

In the battery pack according to one aspect of the disclosure, the cooling plate and the battery cell are bonded through a thermally conductive structural adhesive.

In the battery pack according to one aspect of the disclosure, the cooling plate has one or more fins used for heat exchange with the outside of the vehicle.

In the battery pack according to one aspect of the disclosure, the fins extend in a forward direction of the vehicle.

In the battery pack according to one aspect of the disclosure, a bottom shield is arranged below the cooling plate and configured to protect and insulate the cooling plate.

In the battery pack according to one aspect of the disclosure, the bottom shield is provided with an air passage opening/closing device, when the air passage opening/closing device is opened, the cooling plate is allowed to perform heat exchange with the outside of the vehicle, and when the air passage opening/closing device is closed, the cooling plate is suppressed from performing heat exchange with the outside of the vehicle.

In the battery pack according to one aspect of the disclosure, a heat-insulation coating is applied to a lower side of the bottom shield.

According to one aspect of the disclosure, the battery pack includes a pump and/or a heating rod, the pump being configured to enable the immersion liquid to flow, and the heating rod being configured to heat the immersion liquid.

In addition, according to one aspect of the disclosure, a method for thermal management of a battery pack is provided, including heating a battery cell with an immersion liquid, and transferring heat of the battery cell to the outside of a vehicle using a cooling plate.

In the method for thermal management of a battery pack according to one aspect of the disclosure, the battery pack has a battery management system for controlling a pump, a heating rod, and an air passage opening/closing device.

The beneficial effects of the disclosure include: the cooling plate is arranged under the housing, and the cooling plate can transfer the heat of the battery cell to the outside of the vehicle so as to cool the battery cell; and since the housing is filled with the immersion liquid, and the battery cell is at least partially immersed in the immersion liquid, temperature of the battery cell can be equalized through the immersion liquid, and the battery cell can be heated when the immersion liquid is heated.

### Brief Description of the Drawings

The disclosure of the disclosure is described with reference to accompanying drawings. It should be appreciated that the accompanying drawings are merely used for the purpose of illustration, and are not intended to limit the scope of protection of the disclosure. In the accompanying drawings, unless otherwise specified, the same reference numerals are used to refer to the same components. In the figures:
Fig. 1 illustrates a battery pack according to an implementation of the disclosure;
Fig. 2 illustrates the battery pack in Fig. 1 in a perspective;
Fig. 3 illustrates the battery pack in Fig. 1 in another perspective;
Fig. 4 illustrates a part of a cooling plate of the battery pack in Fig. 1;
Fig. 5 illustrates an air passage between a cooling plate and a bottom shield, in which the air passage opening/closing device is in a closed state; and
Fig. 6 illustrates an air passage between a cooling plate and a bottom shield, in which the air passage opening/closing device is in an opening state.

### Detailed Description of Embodiments

It can be readily understood that according to the technical solution of the disclosure, a person of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Directional terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well.

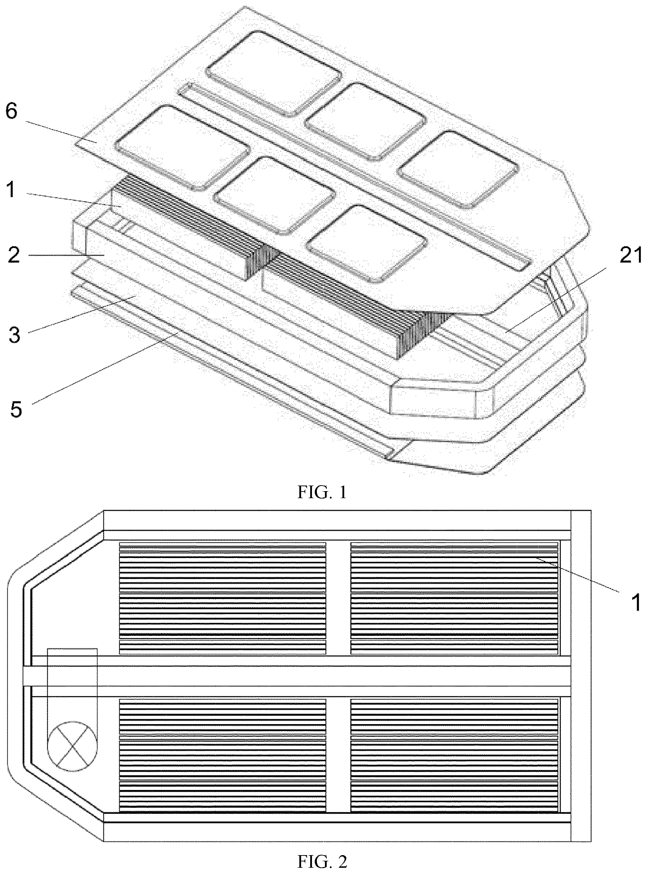

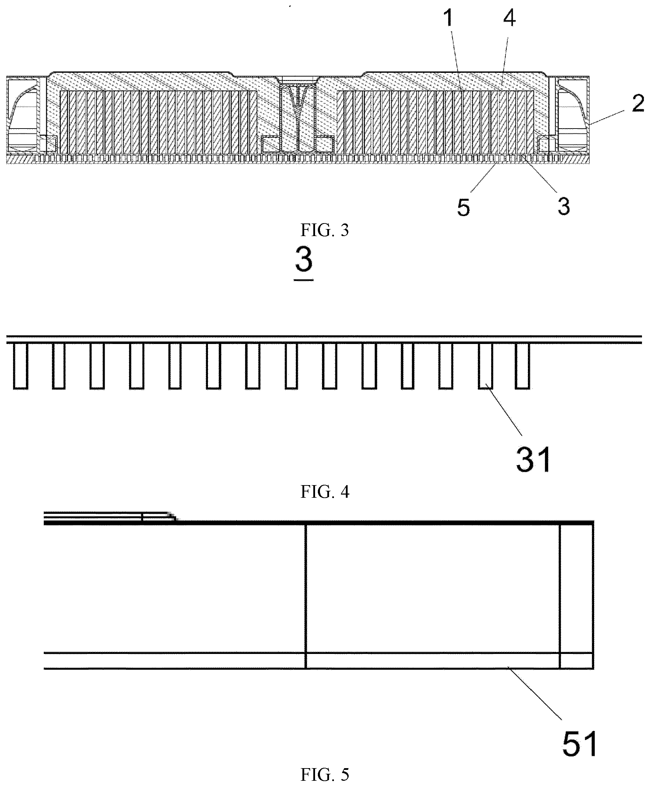

According to one implementation of the disclosure with reference to Fig. 1 to Fig. 6, it can be seen: a battery pack includes a battery cell 1 and a housing 2, wherein the battery cell 1 is accommodated in the housing 2, a cooling plate 3 is arranged under the housing 2, at least part of the cooling plate 3 communicates the outside of the vehicle so that the cooling plate 3 can transfer heat of the battery cell 1 to the outside of the vehicle by means of, for example, air, the housing 2 is filled with an immersion liquid 4, and the battery cell 1 is at least partially immersed in the immersion liquid 4, referring to Fig. 3. In this regard, the immersion liquid 4 has functions of immersing the battery cell 1 and being capable of performing heat exchange with the battery cell 1.

The battery pack includes a plurality of individual battery cells. Each battery cell is constructed into a flat cube. Several individual battery cells are integrated into a battery cell module. There is a gap between the individual battery cells, and the immersion liquid 4 can be in direct contact with the individual battery cells and flows between the individual battery cells, as shown in Fig. 2 and Fig. 3. The "battery cell" mentioned in the disclosure may refer to both an individual battery cell and a battery cell module.

In the battery pack according to the disclosure, the cooling plate 3 is arranged under the housing 2, and the cooling plate 3 can transfer the heat of the battery cell 1 to the outside of the vehicle so as to cool the battery cell 1. The housing 2 is filled with the immersion liquid 4, the battery cell 1 is at least partially immersed in the immersion liquid 4, temperature of the battery cell 1 can be equalized through the immersion liquid 4, and the battery cell 1 can be heated when the immersion liquid 4 is heated.

In the implementation shown in the figure, the bottom of the housing 2 is provided with a support bar 21, and apart from that, other parts on the same horizontal plane as the support bar 21 are constructed as a hollow structure. The support bar 21 is configured to support the battery cell 1. The cooling plate 3, at the bottom of the housing 2, is disposed below the support bar 21.

In an implementation, the cooling plate 3 is constructed such that one part is below the support bar 21 and another part is flush with the support bar 21. In this way, the cooling plate 3 can be in direct contact with the bottom of the battery cell 1, so as to directly transfer the heat of the battery cell 1 to the outside of the vehicle. The cooling plate 3 and the battery cell 1 are bonded through, for example, a thermally conductive structural adhesive.

In another implementation, the cooling plate 3 is constructed not to be in direct contact with the battery cell 1, but the cooling plate 3 is in direct contact with the immersion liquid 4, and heat is first transferred from the battery cell 1 to the immersion liquid 4, and then from the immersion liquid 4 to the cooling plate 3. In this way, the cooling plate 3 can indirectly transfer the heat of the battery cell 1 to the outside of the vehicle.

In yet another implementation, the cooling plate 3 can be constructed to be in contact with the battery cell 1 and the immersion liquid 4 at the same time. In this way, the cooling plate 3 can indirectly and indirectly transfer the heat of the battery cell 1 to the outside of the vehicle, thereby improving cooling efficiency of the battery pack.

In addition, the battery pack is further provided with a top cover 6 for covering and protecting an upper side of the battery cell 1. In the battery pack, the top cover 6, the housing 2, and the cooling plate 3 form a closed space, and the immersion liquid 4 can flow in the closed space without leaking out.

As shown in Fig. 4, the cooling plate 3 has one or more fins 31 used for heat exchange with the outside of the vehicle. The fins 31 are arranged on a lower side of the cooling plate 3, and each of the fins is constructed as a flat cube. The fins 31 extend in a forward (backward) direction of the vehicle, that is, the perspective in the figure is from the rear of the vehicle to the front (or from the front to the rear of the vehicle). During driving of the vehicle, a speed of the vehicle in the forward direction of the vehicle relative to the outside air is relatively high. Since the fins 31 extend in the forward direction of the vehicle, heat can be transferred from the fins 31 to the outside air more quickly, thereby improving heat dissipation efficiency of the battery pack. Similarly, the individual battery cells also extend in the forward (backing) direction of the vehicle, and accordingly the heat dissipation efficiency and temperature equalization of the battery pack are improved.

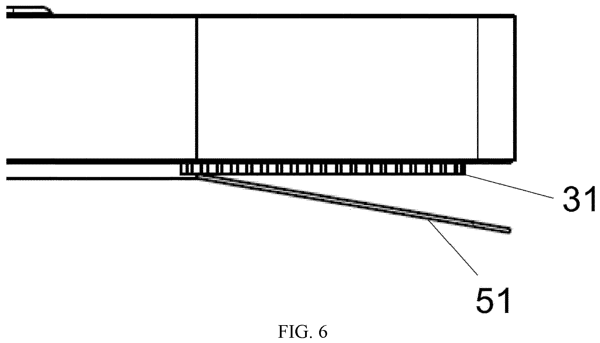

A bottom shield 5 is arranged below the cooling plate 3 (specifically under the fins 31) and configured to protect and insulate the cooling plate 3. The bottom shield 5 can be constructed to fully cover the lower side of the battery pack, so as to better isolate the heat exchange between the battery pack and the outside of the vehicle, which is especially beneficial in a low temperature environment. The bottom shield 5 is, for example, a part of an underbody shield of the overall vehicle. An air passage is formed between the cooling plate 3 and the bottom shield 5, and the air passage is controlled by, for example, an air passage opening/closing device 51 arranged on the bottom shield 5. When needed, the air passage is opened through the air passage opening/closing device 51 to allow the cooling plate 3 to exchange heat with the outside of the vehicle, thereby cooling the battery pack, as shown in Fig. 6; or, the air passage can be closed through the air passage opening/closing device 51 to suppress the cooling plate 3 from performing heat exchange with the outside of the vehicle, as shown in Fig. 5. Generally, the more intense driving may cause a greater discharge power of the battery, greater heat generation, a greater flow rate of air passing through the cooling plate 3, and better heat dissipation. In addition, by controlling an opening degree of the air passage opening/closing device 51, an intake air rate can also be adjusted. A heat-insulation coating is applied to a lower side of the bottom shield 5, providing a heat-insulation performance better.

It should be noted that when the air passage is closed by the air passage opening/closing device 51, air exists between the cooling plate 3 and the bottom shield 5, the air is isolated from the outside due to the presence of the bottom shield 5 and fails to flow or is slow to flow, so that it is difficult to transfer heat from the cooling plate 3 into the air, and better heat insulation is provided for the battery pack.

In addition, the battery pack also includes a pump and a heating rod. The pump provides a power source for flowing of a liquid in the battery pack and is thus configured to enable the immersion liquid 4 to flow. The position of the pump is arranged based on the battery cell 1, so that a flow rate of the liquid passing through each region of the battery pack is substantially the same, and temperature equalization of the battery cell 1 is ensured. A specific position of the pump can be determined by an optimal flow distribution ratio through computational fluid dynamics (CFD) simulation. For example, the pump is arranged in a junction region between a battery front compartment and a battery cell compartment. The heating rod is configured to heat the immersion liquid 4. The heating rod is in direct contact with the immersion liquid 4, and an optimal position of the heating rod can be determined through simulation analysis. For example, the heating rod is provided with a sleeve, so that the heating rod cannot be in contact with the battery. In addition, structures such as the housing 2 and the top cover 6 can be subjected to iterative optimization by using CFD, so that the amount of use of the immersion liquid 4 is controlled.

The disclosure further provides a method for thermal management of the battery pack in any one of the foregoing implementations. In the method, the battery cell 1 is directly heated inside the battery pack with the immersion liquid 4 (e.g., using heat from the heating rod), and heat of the battery cell 1 is transferred to the outside of the vehicle through the cooling plate 3. The heat of the heating rod is from, for example, electrical energy of the battery pack itself or an external charging gun. The technical effects of the method correspond to the previous description, and thus will not be elaborated here. In addition, the battery pack has a battery management system (BMS) for controlling a pump, a heating rod, and an air passage opening/closing device 51. For example, the battery management system controls a flow rate of the immersion liquid 4 inside the battery pack by controlling a power of the pump, controls a heating power of the immersion liquid 4 by controlling a power of the heating rod, and controls an opening degree, i.e., controls a cooling power by controlling the air passage opening/closing device 51 on the bottom shield 5.

Exemplarily, the battery pack/the method for thermal management of the battery pack according to the disclosure has the following working process.

Scenario I: Heating is required in the case where the battery is low in temperature. First, a sensor is configured to sense an ambient temperature, if the ambient temperature is greater than a battery cell temperature, then the air passage opening/closing device 51 is opened, so that the air passage between the cooling plate 3 and the bottom shield 5 is opened. If the ambient temperature is less than the battery cell temperature, then the air passage opening/closing device 51 is closed, so that the air passage between the cooling plate 3 and the bottom shield 5 is closed. Then, the immersion liquid 4 is driven by the pump to flow through a surface of the battery cell 1, and the heating power of the heating rod is controlled by the BMS according to a target temperature and working condition, so that the battery cell 1 is heated.

Scenario II: Cooling is required in the case of intense driving. The BMS acquires that the battery cell temperature rises above a threshold to turn off the heating rod and open the air passage opening/closing device 51, then the cooling plate 3 and thus the battery cell 1 are cooled through air flowing through the vehicle. The power of the pump and therefore the flow rate of the immersion liquid 4 is controlled based on a real-time temperature. In this process, no additional cooling power is required for cooling. The energy consumption comes only from the pump for temperature equalization. When cooling is not required, the air passage opening/closing device 51 is closed, and the pump runs at a small flow rate, so that an operating temperature of the battery is above a lower limit of the optimal operating temperature, and temperature equalization is achieved through liquid circulation.

Scenario III: A temperature equalization cycle is started in the case of super-fast charging. It is applied to high-temperature-resistant battery cells (such as solid-state batteries), and an upper limit of the temperature rise for high-current fast charging is relatively wide. Except for a special fast charging condition (a high current about 900A) in a battery swapping station, forced cooling is not required. During super-fast charging, the pump is turned to start a circulation of the immersion liquid 4 to alleviate a temperature imbalance of the individual battery cells, for example, heat generated at a tab can be quickly dispersed with flowing of the immersion liquid 4.

The technical scope of the disclosure is not merely limited to the above description. A person skilled in the art can make various variations and modifications to the above embodiments without departing from the technical concept of the disclosure, and these variations and modifications shall fall within the scope of protection of the disclosure.

## Claims

1. A battery pack, comprising a battery cell (1) and a housing (2), wherein the battery cell (1) is accommodated in the housing (2), a cooling plate (3) is arranged under the housing (2), the cooling plate (3) can transfer heat of the battery cell (1) to the outside of a vehicle, the housing (2) is filled with an immersion liquid (4), and the battery cell (1) is at least partially immersed in the immersion liquid (4).

2. The battery pack according to claim 1, wherein the cooling plate (3) is arranged at the bottom of the housing (2), and the cooling plate (3) is in contact with the battery cell (1) and/or the immersion liquid (4).

3. The battery pack according to claim 1 or 2, wherein the cooling plate (3) and the battery cell (1) are bonded through a thermally conductive structural adhesive.

4. The battery pack according to any one of claims 1 to 3, wherein the cooling plate (3) has one or more fins (31) used for heat exchange with the outside of the vehicle.

5. The battery pack according to claim 4, wherein the fins (31) extend in a forward direction of the vehicle.

6. The battery pack according to any one of claims 1 to 5, wherein a bottom shield (5) is arranged below the cooling plate (3) and configured to protect and insulate the cooling plate (3).

7. The battery pack according to claim 6, wherein the bottom shield (5) is provided with an air passage opening/closing device (51), when the air passage opening/closing device (51) is opened, the cooling plate (3) is allowed to perform heat exchange with the outside of the vehicle, and when the air passage opening/closing device (51) is closed, the cooling plate (3) is suppressed from performing heat exchange with the outside of the vehicle.

8. The battery pack according to claim 6 or 7, wherein a heat-insulation coating is applied to a lower side of the bottom shield (5).

9. The battery pack according to claim any one of claims 1 to 8, further comprising a pump and/or a heating rod, the pump being configured to enable the immersion liquid (4) to flow, and the heating rod being configured to heat the immersion liquid (4).

10. A method for thermal management of the battery pack according to any one of claims 1 to 9, comprising: heating a battery cell (1) with an immersion liquid (4), and transferring heat of the battery cell (1) to the outside of a vehicle through a cooling plate (3).

11. The method according to claim 10, wherein the battery pack has a battery management system for controlling a pump, a heating rod, and an air passage opening/closing device (51).
